# EUROPEAN PATENT SPECIFICATION

(11) **EP 1 403 545 B1**
(45) Date of publication and mention of the grant of the patent: **14.12.2005**
(21) Application number: 03078047.2
(22) Date of filing: 26.09.2003
(51) Int. Cl.: F16D 27/00

(54) **Clutch actuator**
Kupplungsbetätigungsvorrichtung
Actionneur d'embrayage

(30) Priority: 26.09.2002 JP 2002281717
(43) Date of publication of application: 31.03.2004
(73) Proprietor: AISIN SEIKI KABUSHIKI KAISHA, Kariya-shi, Aichi-ken (JP); AISIN AI Co., Ltd., Nishio-shi, Aichi-ken (JP)
(72) Inventor: Naito, Takao, Nagoya-shi, Aichi-ken (JP); Horiuchi, Ichiroh, Nisshin-shi, Aichi-ken (JP)
(74) Representative: Serjeants

(56) References cited:
- EP-A- 1 103 737
- FR-A- 2 810 381
- US-A- 4 671 400

## Description

### FIELD OF THE INVENTION

This invention generally relates to a clutch actuator.

### BACKGROUND OF THE INVENTION

Conventionally, there has been a known system including a conventionally known manual transmission and an actuator so as to automatically perform a series of shift operation including changing a frictionally engaged condition of a clutch and a gear shift and select operation based on the vehicle driving condition or a driver's intention by use of the actuator. This type of system has been known as an automated manual vehicle transmission.

In this type of system, the actuator for changing the frictionally engaged condition of the clutch is provided with an assist spring for assisting driving force outputted from a driving power source such as an electric motor. Therefore, the assist spring can offer an advantage in restraining the driving force to be outputted from the driving power source. For example, when the clutch is brought to a frictionally non-engaged condition, the driving force to be outputted from the driving power source can be retrained by use of the biasing force of the assist spring. As described above, the driving power source or the actuator can be effectively downsized in result of achieving reduction of the driving force to be outputted from the driving power source.

Further, a frictional clutch in the above-described system includes a clutch disc with a clutch facing. The clutch facing may be worn out during the frictional engagement of the frictional clutch. In this case, the posture of the diaphragm spring may vary in response to the wear-out of the clutch facing such that operational force required for brining the clutch to the frictionally non-engaged condition is increased. In order to overcome the problem, recent developments have lead to the system furthering including a mechanical unit such as an adjusting mechanism for compensating for the wear-out of the clutch disc.

The mechanical unit such as an adjusting mechanism compensates for the wear-out of the clutch disc by bringing the diaphragm spring to an area to which the diaphragm spring is not brought during the normal clutch operation. If the biasing force of the assist spring acts as described above, it may not be easy for setting the conditions of the assist spring such as a spring constant and a spring length.

FR-A-2 810 381 and EP-A-1 103 737 disclose clutch actuators in which a balancing spring assists the rotation of the rotor in one direction.

Accordingly, the above-disclosed clutch actuator is still susceptible of certain improvements with respect to avoiding the process of setting the conditions of the assist spring during compensating for the wear-out of the clutch.

### SUMMARY OF THE INVENTION

The invention provides a clutch actuator as set forth in claim 1.

According to an aspect of the present invention, the clutch actuator includes a driving power source, and a rotor driven for its rotation by the driving power source. The clutch actuator is adjusted for changing an engaged condition of a clutch in accordance with rotation of the rotor within a first rotational range and for compensating for abrasion of the clutch in accordance with rotation of the rotor within a second rotational range beyond the first rotational range.

The clutch actuator is characterized in that the clutch actuator further includes a means for biasing the rotation of the rotor. A one end of the biasing means is supported by the rotor, and the other end thereof is supported by a stationary portion. The clutch actuator is characterized in that the clutch actuator further includes a means for stopping the biasing means from biasing the rotor to rotate by releasing the one end of the biasing means from being supported by the rotor when the rotor rotates within the second rotational range.

It is preferable that the stopping means includes a means for restraining movement of the one end of the biasing means in response to a contact with the one end of the biasing means when the rotor rotates within the second rotational range, and a means for allowing movement of a supporting portion of the rotor supporting the one end of the biasing means by releasing the supporting portion from supporting the one end of the biasing means.

It is further preferable that the stationary portion is a housing for housing the rotor and the biasing means.

It is still further preferable that the one end and the other end of the biasing means are supported by the rotor and the stationary portion via fulcrums, respectively.

It is still further preferable that each fulcrum possesses a means for determining a position of the biasing means.

### BRIEF DESCRIPTION OF THE DRAWING FIGURES

The foregoing and additional features and characteristics of the present invention will become more apparent from the following detailed description considered with reference to the accompanying drawing figures wherein:
FIG. 1 is a longitudinal sectional view schematically illustrating a clutch control apparatus according to an embodiment of the present invention;
FIG. 2 is a front view of a clutch illustrated in FIG. 1 for describing detailed structure thereof;
FIG. 3 is a side view illustrating a structure of an adjusting mechanism illustrated in FIG. 2;
FIG. 4 is a sectional view illustrating the adjusting mechanism during frictional engagement of the clutch;
FIG. 5 is a sectional view illustrating a posture of a diaphragm spring illustrated in FIG. 1 during the frictional engagement of the clutch;
FIGS. 6 (a), (b), (c), and (d) are other side views illustrating the structure of the adjusting mechanism illustrated in FIG. 2 for explaining operation of the adjusting mechanism depending on change of the posture of the diaphragm spring;
FIG. 7 is a front view illustrating an actuator according to the embodiment of the present invention;
FIG. 8 is a sectional view illustrating the actuator taken along a line 8-8 in FIG. 7;
FIG. 9 is a sectional view illustrating the actuator taken along a line 9-9 in FIG. 7;
FIG. 10(a) is an explanatory view for explaining a first rotational range of a worm wheel about a supporting pin thereof within a power assist range of the actuator;
FIG. 10(b) is an explanatory view for explaining a second rotational range of the worm wheel about the supporting pin thereof within a load control range of the actuator; and
FIG. 11 is a diagram explaining characteristics of a load required for deforming a clutch cover illustrated in FIG. 1 when a clutch stroke ST is increased from a clutch fully engaged condition.

### DETAILED DESCRIPTION OF THE INVENTION

A preferred embodiment of the present invention will be described hereinbelow in detail with reference to the accompanying drawings.

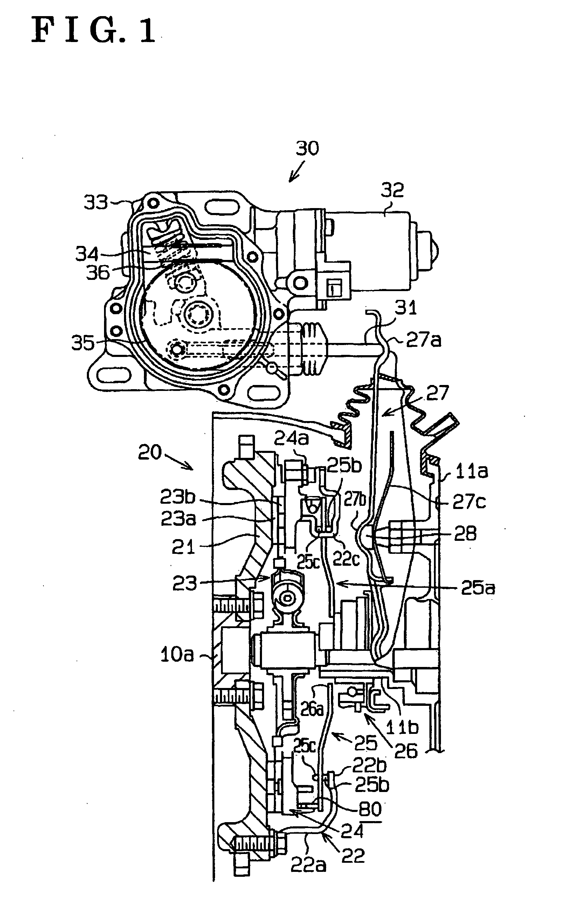

Referring to Fig. 1, a clutch control apparatus according to the embodiment of the present invention includes a friction clutch 20 disposed between an engine and a transmission and an actuator 30 for operating the friction clutch 20. The friction clutch 20 is brought into a frictionally engaged or disengaged condition when the actuator 30 is activated by a control apparatus which is not illustrated.

The friction clutch 20 is configured with main components such as a flywheel 21, a clutch cover 22, a clutch disc 23, a pressure plate 24, a diaphragm spring 25, a release bearing 26, a release fork 27, a pivot supporting member 28 fixed to a transmission casing 11a, and an adjusting mechanism 80. The pressure plate 24 and the diaphragm spring 25 are integrally assembled to the clutch cover 22 such that the pressure plate 24, the diaphragm spring 25, and the clutch cover 22 can be referred to as a clutch cover assembly.

The flywheel 21 is a cast-ion disc and is fixedly connected to a crankshaft 10a of the engine by means of a bolt for their integral rotation.

The clutch cover 22 is in an approximately cylindrical structure and is provided with a cylindrical portion 22a, a flange portion 22b formed at an inner peripheral side of the cylindrical portion 22a, and plural fulcrum forming portions 22c formed at an inner peripheral edge of the cylindrical portion 22a. The plural fulcrum forming portions 22c are arranged with equal spacing between each of them in a circumferential direction. The clutch cover 22 is fixed to the flywheel 21 at outer peripheral portions of the cylindrical portion 22a by means of bolts so as to be rotated integrally with the flywheel 21.

The clutch disc 23 is a friction plate for transmitting driving power of the engine to the transmission. The clutch disc 23 is disposed between the flywheel 21 and the pressure plate 24. A central portion of the clutch disc 23 is spline-engaged with an input shaft of the transmission such that the clutch disc 23 can be moved in an axial direction thereof. Clutch facings 23a, 23b (friction members) are fixed to both outer peripheral surfaces of the clutch disc 23 by means of rivets.

The pressure plate 24 pushes the clutch disc 23 in a direction of the flywheel 21 so as to frictionally engage the clutch disc 23 between the flywheel 21 and the pressure plate 24. Therefore, the pressure plate 24, the clutch disc 23 and the flywheel 21 can be integrally rotated. The pressure plate 24 is connected to the clutch cover 22 via straps 24a so as to be rotatable along with the rotation of the clutch cover 22.

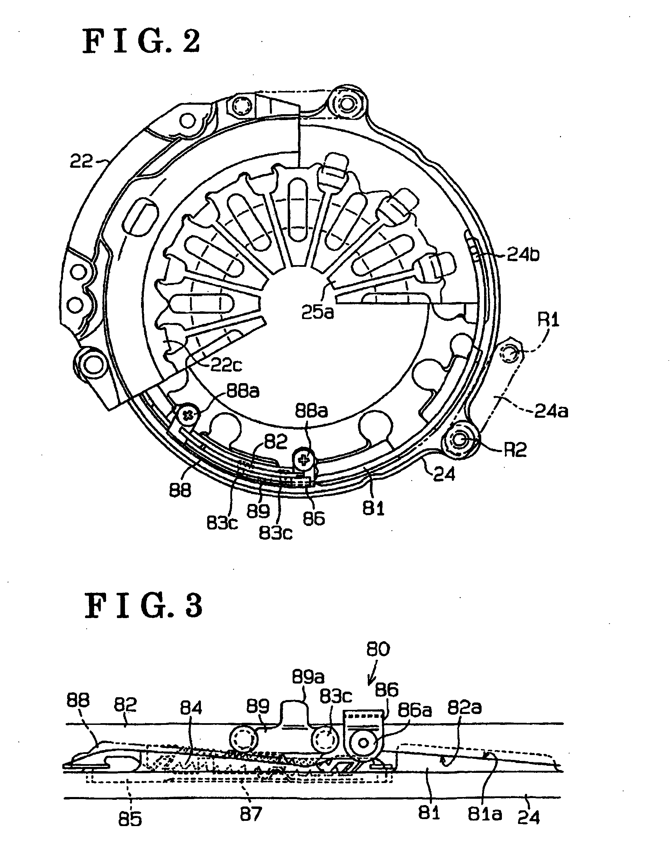

Each strap 24a is formed by plural thin accumulated leaf springs. Referring to Fig. 2, one end of each strap 24a is secured to an outer peripheral portion of the clutch cover 22 by means of a rivet R1 and the other end thereof is secured to a projection provided on an outer peripheral portion of the pressure plate 24 by means of a rivet R2. Therefore, each strap 24a applies biasing force to the pressure late 24 in an axial direction so that the pressure plate 24 is moved away from the flywheel 21.

As illustrated in FIG. 2, the diaphragm spring 25 is configured with twelve elastic plate members (hereinafter, referred to as lever members 25a) radially arranged from the inner periphery of the cylindrical portion 22a of the clutch cover 22. Each lever member 25a is held at the fulcrum forming portion 22c via a pair of annular fulcrum members 25b and 25c both of which are disposed at axial sides of the lever members 25a. Therefore, each lever member 25a can be pivotably moved relative to the clutch cover 22 via the fulcrum members 25b, 25c.

The release bearing 26 is held to be slidably movable relative to a holding sleeve 11b supported by the transmission casing 11a enclosing an outer periphery of the input shaft of the transmission. The release bearing 26 is provided with a force point portion 26a for pushing an inner end portion of each lever member 25a, i.e. a central side of the diaphragm spring 25, towards the flywheel 21.

The release fork (a fork member) 27 is employed for slidably moving the release bearing 26 in an axial direction in response to operation of the actuator 30. One end of the release fork 27 is in contact with the release bearing 26 and the other end thereof is in contact with a tip end portion of a rod 31 of the actuator 30 via a contact portion 27a. The release fork 27 is assembled at the pivot supporting member 28 by a spring 27c fixed to the transmission casing 11a. Further, the release fork 27 is arranged to be pivotably moved with the pivot supporting member 28 as a fulcrum at an approximately central portion 27b of the release fork 27.

The adjusting mechanism 80 acts for defining a force transmitting path between the pressure plate 24 and the diaphragm spring 25 and for adjusting an axial distance between the diaphragm spring 25 and the pressure plate 24.

Next, the following description will be given for explaining the adjusting mechanism 80 with reference to FIGS. 2 through 6.

As illustrated in FIGS. 2 and 3, an annular shaped taper portion 81 is provided at the outer peripheral edge of the pressure plate 24. The taper portion 81 includes plural saw-toothed taper surfaces 81 a which are upright in a direction of the diaphragm spring 25. The adjust wedge member 82 is disposed between the taper surfaces 81a and an outer peripheral edge portion of the diaphragm spring 25. The adjust wedge member 82 is in a ring shaped structure having substantially the same diameter as the one of the taper portion 81 and is provided with wedge side taper surfaces 82a being in the same structure as the taper surfaces 81a. The wedge side taper surfaces 82a are in contact with the taper surfaces 81a, respectively. The adjust wedge member 82 is provided with a plane surface along with the diaphragm spring 25. The adjust wedge member 82 defines the force transmitting path between the pressure plate 24 and the diaphragm spring 25 so as to transmit the force applied to the diaphragm spring 25 and the force generated by the diaphragm spring 25 to the pressure plate 24.

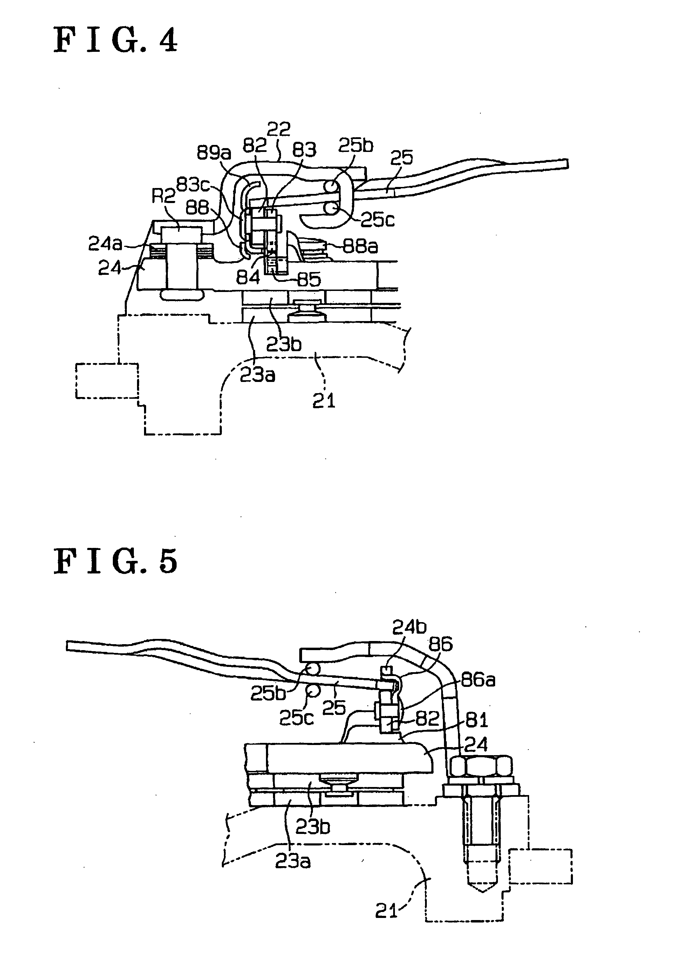

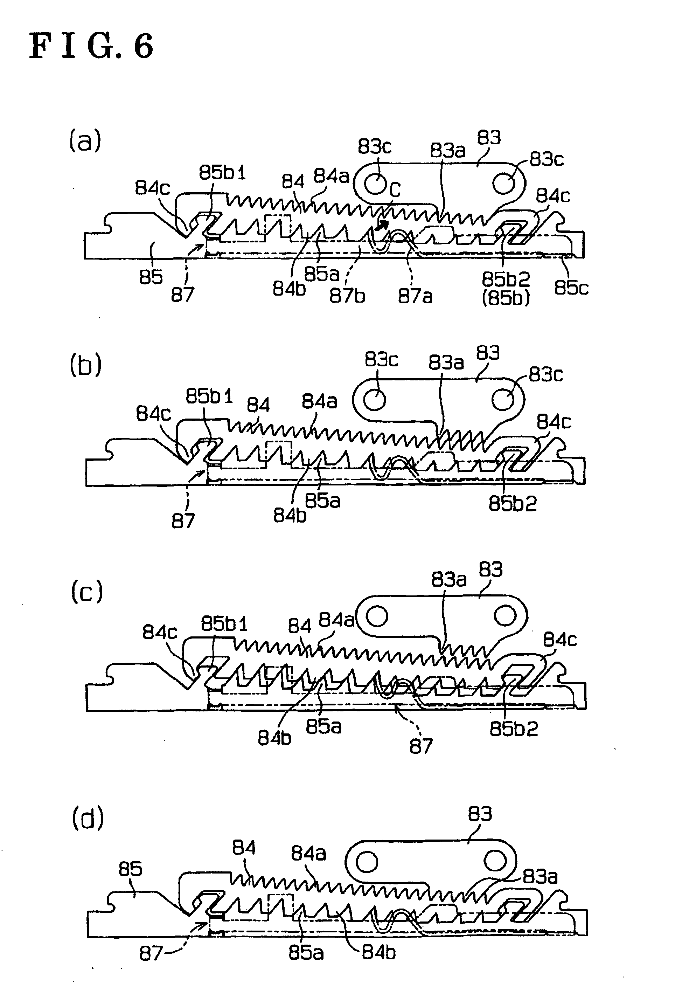

As illustrated in FIGS. 4 and 6, a rack engagement member 83 is fixed to an inner peripheral surface of the adjust wedge member 82 by means of rivets 83c. The rack engagement member 83 is provided with rack engagement teeth 83a being upright in an axial direction from the diaphragm spring 25 to the pressure plate 24. The rack engagement teeth 83a are in a saw-toothed structure or are shaped of triangle with equal space therebetween.

As illustrated in FIGS. 3 and 6, a cam means 85 is assembled at a surface of the pressure plate 24 facing the rack engagement member 83. The cam means 85 is provided with cam teeth 85a being upright in an axial direction from the surface of the pressure plate 24 to the diaphragm spring 25. Projections 85b are provided at both end portions of the cam means 85 so as to project along the upright direction of the cam teeth 85a. A fixed plate member 88 being longer than the cam means 85 in a circumferential direction is assembled along an outer peripheral surface of the taper portion 81. Both end portions of the fixing plate member 88 extends to an inner peripheral side of the taper portion 81 while bridging the both end portions of the lower rack 85. Both end portions of the fixing plate member 88 are fixed to the pressure plate 24 by means of screws 88a, wherein the cam means 85 is secured to the pressure plate 24.

An rack 84 is disposed between the rack engagement member 83 and the cam means 85 and is rotatable relative to the rack engagement member 83 and the cam means 85 in both circumferential and axial directions. The rack 84 is provided with a rack teeth 84a being upright in the axial direction from the pressure plate 24 to the diaphragm spring 25 and is further provided with a cam teeth 84b being upright in the axial direction from the diaphragm spring 25 to the pressure plate 24. The rack teeth 84a are engagable with the rack engagement teeth 83a and the cam teeth 84b are engagable with the cam teeth 85a. Restraining portions 84c are provided at both longitudinal end portions of the rack 84 and are engagable with the projections 85b. A displacement amount of the rack 84 in the axial and circumferential directions relative to the cam means 85 is restrained by the restraining portions 84c hooked at edge portions of the projections 85b before the engagements between the cam teeth 85a and the cam teeth 84b are completely released. The restraining portions 84c are designed so as to restrain the displacement amount of the rack 84 within a range between half a pitch of a tooth surface of the rack teeth 84a and a pitch thereof.

One end of a biasing member 87 is fixed adjacent to a projection 85b1 (one of the projections 85b) at an outer peripheral surface side of the cam means 85 so as to release the rack 84 from being engaged with the cam means 85. The other end of the biasing member 87 extends along the outer peripheral surface of the cam means 85 in a direction of a projection 85b2 (the other one of the projections 85b) of the cam means 85 and further extends in a direction of an inner peripheral surface side of the cam means 85 via a notch 85c. Further, a spring portion 87a extends at the inner peripheral surface of the cam means 85 in a direction from the projection 85b2 to the projection 85b1. The spring portion 87a biases the rack 84 in a direction (in a direction C in Fig. 6(a)) for slidably releasing the cam teeth 84b from being engaged with the cam teeth 85a. A portion of the biasing member 87 between the one end thereof and the notch 85c is employed as a receiving portion 87b for receiving the biasing force of the spring portion 87a for biasing the rack 84. The rack 84 is biased by the biasing member 87 in the direction to be released from the engaged condition with the cam means 85 along with the slidable movement between the cam teeth 85a and the cam teeth 84b.

Stoppers 24b are provided the outer peripheral surface of the pressure plate 24 at the side of the diaphragm spring 25 coaxially with the taper portion 81 and are upright in the axial direction from the pressure plate 24 to the diaphragm spring 25. A predetermined clearance is defined between the stopper 24b and an inner peripheral corresponding wall of the clutch cover 22 when the clutch 20 is under the frictionally engaged condition. The pressure plate 24 is hence movable in the axial direction thereof within the clearance in response to the posture of the diaphragm spring 25. When the stoppers 24b become in contact with the inner peripheral corresponding wall of the clutch cover 22 in response to a posture change of the diaphragm spring 25, a further movement of the pressure plate 24 towards the clutch cover 22 is prohibited.

A holding member 86 is fixed to an outer peripheral surface of the adjust wedge member 82 by means of a rivet 86a. As illustrated in FIG. 3, the holding member 86 extends to a side of the diaphragm spring 25 beyond an upper end surface of the adjust wedge member 82 at the side of the diaphragm spring 25. The holding member 86 is further bent in a direction from an outer peripheral surface side of the adjust wedge member 82 to an inner peripheral surface side thereof. An outer peripheral end portion of the diaphragm spring 25 is held between the holding member 86 and the upper end surface of the adjust wedge member 82. Therefore, the adjust wedge member 82 is movable in an axial direction thereof following the axial movement of the outer peripheral end portion of the diaphragm spring 25 via the holding member 86.

Referring to Fig. 3, an engagement releasing member 89 is assembled to the outer peripheral surface of the adjust wedge member 82 which oppositely corresponds to the surface fixed with the rack engagement member 83. One end of the engagement releasing member 89 is equipped to the peripheral surface of the adjust wedge ember 82 and the other end thereof can become in contact with the surface of the pressure plate 24 at the side of the diaphragm spring 25, wherein the engagement releasing member 89 is pivotabely rotatable about the one end thereof. A projection 89a is provided between the one end of the engagement releasing member 89 and the other end thereof, which is upright in the axial direction from the pressure plate 24 to the diaphragm spring 25. The projection 89a projects having a predetermined distance towards the inner peripheral corresponding wall of the clutch cover 22 when the clutch 20 is under the frictionally engaged condition. Further, the one end of the engagement releasing member 89 is connected to the adjust wedge member 82 by means of one of rivets 83c for fixing the rack engagement member 83. The predetermined distance between the projection 89a and the inner peripheral corresponding wall of the clutch cover 22 is preset so as to bring the projection 89a in contact with the inner peripheral corresponding wall of the clutch cover 22 concurrently with the contact of the stoppers 24b with the inner peripheral side of the clutch cover 22.

Next, the following explanation will be given for describing operation for transmitting the driving force from the engine to the transmission during the frictional engagement of the friction clutch 20. First, the rod 31 is moved to the left side in the drawing by activating the actuator 30. Meanwhile, the release baring 26 has been applied with force by the diaphragm spring 25 in a direction to be moved away from the flywheel 21, i.e. in the right direction in Fig. 1. The force is transmitted to the release fork 27 via the release bearing 26 so that the release fork 27 is applied with a force to be pivotablly rotated with the pivot-supporting member 28 as the fulcrum in the counterclockwise direction in Fig. 1. Therefore, the central portion of the diaphragm spring 25 is displaced in the direction to be away from the flywheel 21.

Under the above-described condition, the posture of the diaphragm spring 25 varies about the fulcrum members 25b, 25c such that the adjust wedge member 82 being in contact with the outer peripheral edge portion of the diaphragm spring 25 is moved towards the flywheel 21. The pressure plate 24 is hence applied with a force to be moved towards the flywheel 21 via the taper portion 81 so that the clutch disc 23 is frictionally engaged between the pressure plate 24 and the flywheel 21. At the same time, the pressure plate 24 is applied with a force to be moved towards the flywheel 21 via the rack engagement member 83, the rack 84, and the cam means 85. Therefore, the engaged condition between the rack engagement teeth 83a and the rack teeth 84a and the engaged condition between the cam teeth 84b and the cam teeth 85a are maintained. The rack engagement member 83 is hence not allowed to be rotated relative to the cam means 85 so that the adjust wedge member 82 is not rotated relative to the pressure plate 24. The clutch disc 23 is hence frictionally engaged with the flywheel 21 for their integral rotation such that the driving force from the engine can be transmitted to the transmission. At this point, the axial distance between the pressure plate 24 and the outer peripheral edge portion of the diaphragm spring 25 can be maintained at a constant value.

Next, the following explanation will be given for describing the operation of the friction clutch 20 during the frictionally disengaged condition thereof, wherein the driving force from the engine is not transmitted to the transmission. First, the rod 31 is moved to the right side in the drawing by activating the actuator 30. The release fork 27 is applied with a force to be moved in the right direction in Fig. 2 via the contact portion 27a. The release fork 27 is then pivotably rotated in the clockwise direction in Fig. 1 with the pivot supporting member 28 as the fulcrum. Therefore, the release bearing 26 is pushed towards the flywheel 21.

The diaphragm spring 25 is applied with a force to be moved towards the flywheel 21 at the force point portion 26a so as to be pivotably rotated with a center on the fulcrum members 25b, 25c. The outer peripheral edge portion of the diaphragm spring 25 is hence moved away from the flywheel 21. Therefore, the force pushing the pressure plate 24 towards the flywheel 21 via the adjust wedge member 82 is decreased. The pressure plate 24 has been connected to the clutch cover 22 via the straps 24a and has been always biased to be moved away from the flywheel 21. The pressure plate 24 is hence slightly separated from the clutch disc 23 by the biasing force. At this point, the driving power of the engine 10 is not transmitted to the transmission 11.

The clutch stroke ST of the rod 31 is controlled within a range, in which the stoppers 24b are not brought in contact with the clutch cover 22, when the clutch 20 is brought into a frictionally disengaged condition during the normal clutch operation. The axial distance between the pressure plate 24 and the diaphragm spring 25 is not hence changed so that the engagement condition between the rack engagement teeth 83a and the rack teeth 84a and the engagement condition between the cam teeth 85a and the cam teeth 84b can be maintained. The adjust wedge member 82 is not hence rotated relative to the pressure plate 24. In other words, the stroke ST of the rod 31 is predetermined at a value in which the engagement condition between the first rack engagement teeth 83a and the rack teeth 84a and the engagement condition between the cam teeth 85a and the cam teeth 84b are not released.

Next, following description will be given for explaining operation for compensating for the abrasion of the clutch facings 23a and 23b. According to the embodiment of the present invention, the compensating operation is referred to as an adjust operation. The adjust operation is performed at least when the output shaft of the engine rotates within a relatively low speed range.

When the friction clutch 20 has been under the frictionally disengaged condition during the normal clutch operation, the rod 31 is moved in the right-hand side in FIG. 1 by further activating the actuator 30. The release fork 27 is applied with the force in the right-hand direction in FIG. 1 at the contact portion 27a such that the release fork 27 is pivotably rotated in the clockwise direction in FIG. 1 with the pivot supporting member 28 as a fulcrum. Further, the release bearing 26 is pushed towards the flywheel 21. The central portion of the diaphragm spring 25 is moved towards the flywheel 21 at the for point portion 26a. Therefore, the posture of the diaphragm spring 25 is further changed. In this case, the outer peripheral edge portion of the diaphragm spring 25 is moved further away from the flywheel 21, wherein the stopper portions 24b come in contact with the inner peripheral corresponding wall of the clutch cover 22. Substantially at the same time, the projection 89a of the engagement releasing member 89 comes in contact with the inner peripheral corresponding wall of the clutch cover 22.

The pressure plate 24 has been applied with the biasing force of the straps 24a before the stopper portions 24b and the projection 89a come in contact with the clutch cover 22. The taper portion 81 is hence moved in the axial direction along with the adjust wedge member 82 moving in the axial direction with the outer peripheral edge portion of the diaphragm spring 25. Therefore, the rack engagement member 83 is not rotated relative to the cam means 85 in the axial direction. Further, the engagement condition between the rack engagement teeth 83a and the rack teeth 84a and the engagement condition between the cam teeth 85a and the cam teeth 84b are maintained. The adjust wedge member 82 is not rotated relative to the pressure plate 24, i.e. the taper portion 81 in the circumferential direction.

When the actuator 30 is still further actuated under the above-described condition, the posture of the diaphragm spring 25 is further changed. At this point, the stopper portions 24b of the pressure plate 24 has been in contact with the inner peripheral corresponding wall of the clutch cover 22. However, in response to the further actuation of the actuator 30, the posture of the diaphragm spring 25 is further changed along with the outer peripheral edge portion thereof moving away from the flywheel 21. Accordingly, the adjust wedge member 82, which is applied with the moving force of the diaphragm spring 25, is moved in the axial direction following the axial movement of the outer peripheral edge portion of the diaphragm spring 25, wherein the adjust wedge member 82 is moved away from the taper portion 81. The rack engagement member 83 fixed at the adjust wedge member 82 is then moved in the axial direction relative to the cam means 85 fixed to the pressure plate 24. The rack 84 has been biased in the C direction illustrated in FIG. 6 (a) by the biasing member 87. However, the rack engagement member 83 is moved in the axial direction. Therefore, the rack 84 is not allowed to move in the circumferential direction before the engagement condition between the rack engagement teeth 83a and the rack teeth 84a is completely released.

As described above, when the stroke ST of the rod 31 is moved in the axial direction within a range, in which the engagement between the rack engagement teeth 83a and the rack teeth 84a is not completely released, the rack engagement member 83 is axially moved away from the cam means 85. However, the rack 84 is not axially moved since the cam teeth 84b of the rack 84 has been engaged with the cam teeth 85a of the cam means 85. FIG. 6 (b) illustrates the adjusting mechanism 80, in which the adjust wedge member 82 has been axially moved relative to the pressure plate 24 from the condition illustrated in FIG. 6 (a) immediately prior to the complete release of the rack engagement teeth 83a from being engaged with the rack teeth 84a.

When the adjust wedge member 82 is further moved away form the pressure plate 24 in accordance with the further posture change of the diaphragm spring 25, the rack engagement teeth 83a of the rack engagement member 83 is completely released from being engaged with the rack teeth 84a of the rack 84. That is, as described above, when the stroke ST of the rod 31 is further increased so as to release the engagement condition between the rack engagement teeth 83a and the rack teeth 84a, the rack engagement teeth 83a is completely disengaged form the rack teeth 84a. At this point, the rack 84 is allowed to move in the circumferential direction. Therefore, the rack 84 is moved in the axial and circumferential directions along with the slidable movement between the cam teeth 84b and the cam teeth 85a.

At the same time, the rack engagement teeth 83a is moved away from the rack teeth 84a in response to further posture change of the diaphragm spring 25. However, the axial movement amount of the rack 84 relative to the cam means 85 is restrained at a predetermined distance by means of the restraining portions 84c. Therefore, as illustrated in FIG. 6 (c), when the axial movement amount of the uppers rack 84 reaches the predetermined distance, the rack 84 is restrained from being axially moved relative to the cam means 85. Hereinafter, the circumferential movement amount of the rack 84 restrained by the restraining portions 84c is preset within a range between half pitch and a pitch of a tooth surface of one of the rack teeth 84a. As illustrated in FIGS. 6 (c), the position of the rack teeth 84a is displaced by half a pitch of the tooth surface or a pitch thereof relative to the rack engagement teeth 83a, compared with the positions illustrated in FIGS. 6 (a) and 6 (b). The adjust wedge member 82 illustrated in FIG. 6 (c) is not rotated in the circumferential direction relative to the pressure plate 24.

Next, the following explanation will be given for describing operation of the engagement releasing member 89 from the condition of the adjusting mechanism 80 illustrated in FIG. 6 (a) to the conditions thereof illustrated in FIGS. 6 (b) and 6 (c).

When the adjust wedge member 82 is further moved away from the pressure plate 24 during the contact of the projection 89a of the engagement releasing member 89 with the clutch cover 22, the axial movement of the projection 89a is restrained by the clutch cover 22. Therefore, the engagement releasing member 89 is rotated in the counterclockwise direction about the rivet 83c of the one end thereof. Therefore, the surface of the pressure plate 24 at the side of the diaphragm spring 25 is pushed downwards by the other end of the engagement releasing member 89, wherein the adjust wedge member 82 is surely moved away from the pressure plate 24. In this case, even if there is rust between the taper surfaces 81a and the wedge side taper surfaces 82a, the relative movement between the adjust wedge member 82 and the taper portion 81 can be surely performed.

Next, the following explanation will be given for describing operation of the rod 31 by activating the actuator 30 in a reverse direction under the condition of the adjusting mechanism 80 illustrated in FIG. 6 (c). The stroke ST of the rod 31 is decreased and the posture of the diaphragm spring 25 is changed. More particularly, the outer peripheral edge portion of the diaphragm spring 25 is moved in a direction to get closer to the flywheel 21. The rack engagement teeth 83a are initially engaged with the rack teeth 84a of the rack 84. As illustrated in FIG. 6 (c), the rack 84 has been displaced by half a pitch compared with the condition illustrated in FIG. 6 (b). Therefore, the tooth surface of the rack teeth 84a facing the rack engagement teeth 83a illustrated in FIG. 6 (c) has been shifted by a pitch from the rack teeth 84a facing the rack engagement teeth 83a illustrated in FIG. 6 (b). Therefore, when the stroke ST of the rod 31 is reduced under the condition illustrated in FIG. 6 (c), the rack teeth 84a meshed with the rack engagement teeth 83a are shifted by a pitch of the tooth surface of the rack teeth 84a in the right-side direction in the drawing. At this point, the adjust wedge member 82 is pushed towards the pressure plate 24 by the pushing force of the diaphragm spring 25, wherein the rack engagement teeth 83a and the rack teeth 84a are engaged, and the cam teeth 85a and the cam teeth 84b are also engaged. However, the rack engagement teeth 83a are meshed with rack teeth 84a shifted by a pitch of the tooth surface. Tooth surfaces of the rack engagement teeth 83a and the rack teeth 84a are hence slidably meshed, and tooth surfaces of the cam teeth 84b and the cam teeth 85a are also hence slidably meshed. Upon the slidable meshing thereof, the rack 84 is applied with a rotational force from the rack engagement member 83, and the cam means 85 is applied with a rotational force from the rack 84. The adjust wedge member 82 is then rotated relative to the pressure plate 24 in response to the rotational force, wherein the adjusting mechanism 80 is brought into the condition illustrated in FIG. 6 (d).

As illustrated in FIG. 6 (d), the contact position between each taper surface 81a and the wedge taper surface 82a is shifted by a pitch of the tooth surface of the rack tooth 84a. Therefore, the axial distance between the outer peripheral edge portion of the diaphragm spring 25 and the pressure plate 24 is changed. As described above, the posture of the diaphragm spring 25 is corrected during the normal clutch operation. In this case, the projection 89a of the engagement releasing member 89 is released from being restrained by the clutch cover 22 any more. The pressure plate 24 is not pushed by the other edge of the engagement releasing member 89 any more, wherein the engagement releasing member 89 is returned to an initial position.

As described above, according to the embodiment of the present invention, a single adjusting operation can compensate for the abrasion amount of the friction clutch 20 at a degree corresponding to a pitch of the tooth surface of the rack tooth 84a, i.e. at a degree corresponding to a height of the taper surface 81 a across the distance of one tooth pitch.

Further, according to the embodiment of the present invention, a "power assist range" represents a range of the rod stroke ST corresponding to the range in which the stopper portions 24b of the pressure plate 24 are not in contact with the inner peripheral corresponding wall of the clutch cover 22. As aforementioned, in the power assist range, the axial distance between the outer peripheral edge portion of the diaphragm spring 25 and the pressure plate 24 is not changed. Further, a "load control range" represents a range of the rod stroke ST beyond the power assist range. Therefore, the friction clutch 20 is brought into the frictionally engaged or disengaged condition within the power assist range during the normal clutch operation. The adjust operation is performed within the load control range. The rod stroke ST for frictionally disengaging the fiction clutch 20 is predetermined at a value which is smaller than a stroke ST corresponding to a border between the power assist range and the load control range.

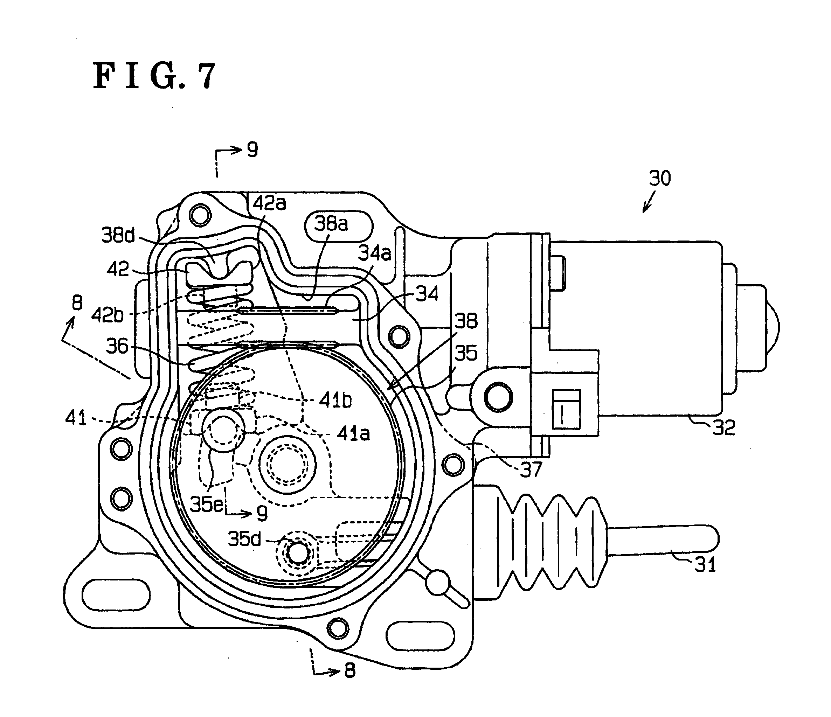

Next, the following explanation will be given for describing the actuator 30 for forwarding and retracting the rod 31 with reference to FIGS 7 through 10 such that the diaphragm spring 25 is applied with a force for shifting the clutch disc 23 between the frictionally engaged and disengaged conditions.

As illustrated in FIG. 7, the actuator 30 is provided with an electric motor 32 as a driving power source applied with direct current. The actuator 30 is further provided with a housing 33 which represents a stationary portion, a rotary shaft 34 driven in rotation by the electric motor 32, a worm wheel 35 driven by a worm gear portion 34a of the rotary shaft 34, an assist spring 36 which is a coiled spring, and a housing cover 37.

The electric motor 32 rotates the rotary shaft 34 in forward and rearward directions upon being supplied with electric current from a non-illustrated controller. The housing 33 is fixedly mounted on the vehicle and supports the electric motor 32. The housing 33 includes an approximately cylindrical housing portion 38 with a bottom. The rotary shaft 34 projects in the left-hand direction as viewed in FIG. 7 from an upper right side of a side wall 38a defining the housing portion 38. The rotary shaft 34 is rotatably supported by the housing 33 at a base end side of the rotary shaft 34 (the right side as viewed in FIG. 7) and at a tip end side thereof (the left side as viewed in FIG. 7). The worm portion 34a is defined at an axially intermediate portion of the rotary shaft 34.

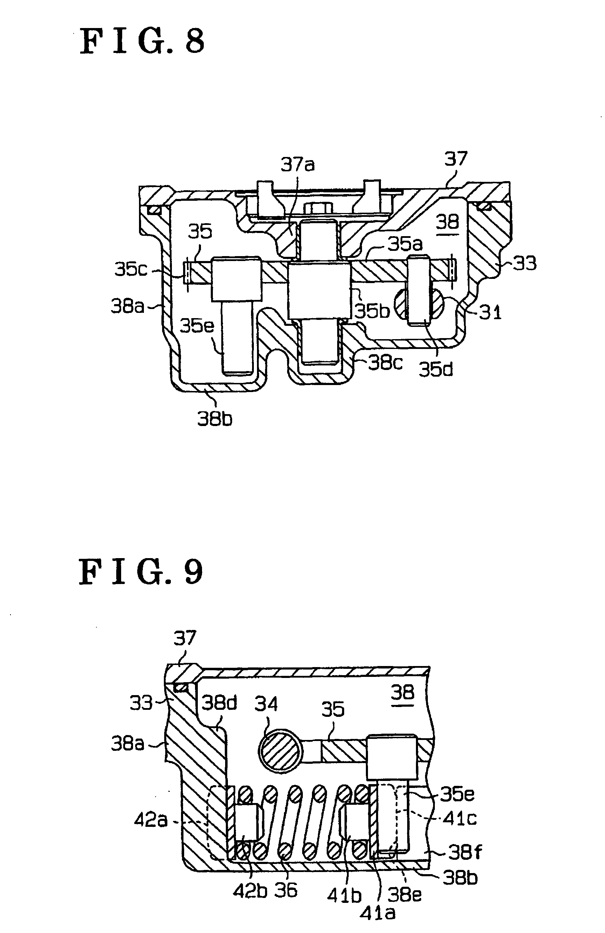

As also illustrated in FIG. 8, a bottom wall 38b of the housing portion 38 possesses an approximately cylindrical bearing portion 38c for rotatably supporting the worm wheel 35. More particularly, the worm wheel 35 possesses an approximately disc-shaped wheel portion 35a and a shaft portion 35b penetrating a central portion of the wheel portion 35a. The worm wheel 35 is rotatably supported by the housing portion 38 with the one side (the lower portion as viewed in FIG. 8) of the shaft portion 35b being inserted into the bearing portion 38c via a bush. Further, a gear portion 35c is defined at an outer peripheral surface of the wheel portion 35a, which is engaged with the worm portion 34a of the rotary shaft 34. Therefore, when the rotary shaft 34 is rotatably driven, the worm wheel 35 is also rotated in association with the rotation of the rotary shaft 34.

An approximately cylindrical rod supporting pin 35d is fixedly assembled at an outer peripheral portion of the worm wheel 35 towards the lower side of the worm wheel 35 and extends approximately in parallel with the axial direction thereof. The rod 31 extends from the one side (the lower right side in FIG. 7) of the side wall 38a in the left-hand side direction towards the rod supporting pin 35d. The rod 31 is rotatably supported by the rod supporting pin 35d via the base end portion of the rod 31 being inserted into the rod supporting pin 35d. As described above, the rod 31 is connected to the worm wheel 35 via the space defined between the worm wheel portion 35a and the bottom wall 38b. When the worm wheel 35 is rotated, the rod 3a is moved forward or rearward relative to the housing 33. For example, when the worm wheel 35 is rotated in the clockwise direction in FIG. 7, the rod 31 is moved in the left direction as viewed in FIG. 7 with the decreasing stroke ST. On the other hand, when the worm wheel 35 is rotated in the counter clockwise direction in FIG. 7, the rod 31 is moved in the right direction as viewed in FIG. 7 with the increasing stroke ST. The rotational range of the worm wheel 35 is set to determine the increased or decreased amount of the stroke ST in response to the rotational direction.

An approximately cylindrical supporting pin 35e is fixedly assembled at an outer peripheral portion of the worm wheel 35 at a upper left side relative to the rotational center of the worm wheel 35 as viewed in FIG. 7. The supporting pin 35e extends approximately in parallel to the axis of the worm wheel 35 towards the one side (to the lower side in FIG. 8). Further, a supporting wall 38d is defined at the one side of the side wall 38a (at the upper left side as viewed in FIG. 7) and comprises an inwardly projecting fulcrum portion facing the supporting pin 35e. The assist spring 36 (i.e. a biasing means) is supported with one end being engaged with the supporting pin 35e and the other end being engaged with the supporting wall 38d.

More particularly, as illustrated in FIGS. 7 and 8, the supporting pin 35e is provided with a fulcrum 41. The fulcrum 41 possesses a seat portion 41 a, of which central portion is recessed relative to the supporting pin 35e, and are pivotally engaged with the supporting pin 35e via the seat position 41a. The fulcrum 41 further possesses a spring locating pin 41b projecting away from the supporting pin 35e from the seat portion 41a. A major diameter of the spring locating pin 41 b is approximately the same as a minor diameter of the assist spring 36. The spring locating pin 41b is employed so as to determine the position of the one end of the assist spring 36.

A fulcrum 42 which may be the same as the fulcrum 41 is provided at the side of the supporting wall 38d. The fulcrum 42 possesses a seat portion 42a, of which central portion is recessed corresponding to the supporting wall 38d, and is pivotally engaged with the supporting wall 38d via the seat position 42a. The fulcrum 42 further possesses a spring locating pin 42b projecting away from the seat position 42a. The major diameter of the spring locating pin 42b is approximately the same as the minor diameter of the assist spring 36. The spring locating pin 42b is employed so as to determine the position of the other end of the assist spring 36.

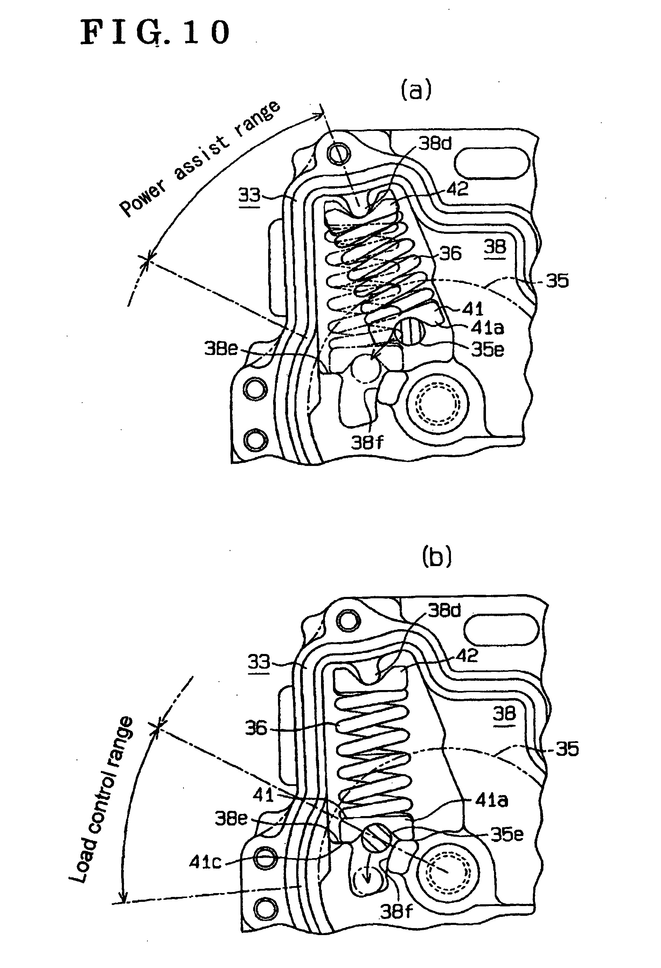

The assist spring 36 is supported between the fulcrums 41 and 42 with the spring locating pins 41b and 42b inserted into the assist spring 36. As described above, the assist spring 36 is housed and supported in the space defined between the wheel portion 35a and the bottom wall 38b. As illustrated in FIG. 10 (a), when the worm wheel 35 is rotated, the assist spring 36 of which one end is fixed to the supporting pin 35e via the fulcrum 41, is rotated in association with the rotation of the worm wheel 35.

As illustrated in FIGS. 9, 10 (a), and 10 (b), a restraining wall 38e of the housing portion 38 is configureed as a stop member so as to prevent the assist spring 36 from following the supporting pin 35e over the full range of rotation of the worm wheel 35. For example, when the worm wheel 35 is rotated to a position illustrated in FIG. 10 (b), the assist spring 36 supported by the fulcrum 41 is restrained from further rotating by the contact of an edge surface 41c of the fulcrum 41 with the restraining wall 38e. Further, a guide groove 38f is defined as a recess in the restraining wall 38e so as to allow passage of the supporting pin 35e past the restraining wall 38e when the fulcrum 41 is restrained by the restraining wall. Therefore, even when the rotation of the assist spring 36 is restrained by the restraining wall 38e, the supporting pin 35e can be moved within a predetermined range along the guiding groove 38f. In this case, the worm wheel 35 can be further rotated while the fulcrum 41 supporting the assist spring 36 remains stationary, in contact with the restraining wall 38e. The assist spring 36 is arranged in the upper left side in FIG. 7 relative to the rotational center of the worm wheel 35 until becoming in contact with the restraining wall 38e. Further, the assist spring 36 is supported being compressed between the fulcrums 41 and 42 and possesses a biasing force for rotating the worm wheel 35 in a counterclockwise direction in FIG. 7. That is, the rod 31 is moved in the right-hand side direction in FIG. 7.

The housing cover 37 is attached to the housing 33 so as to cover an opening portion of the housing 33. As illustrated in FIG. 8, the housing cover 37 possesses a bearing portion 37a so as to rotatably support the worm wheel 35. More particularly, the worm wheel 35 is rotatably supported by the housing cover 37 with the other end (the upper side in FIG. 8) being inserted into the bearing portion 37a via a bush.

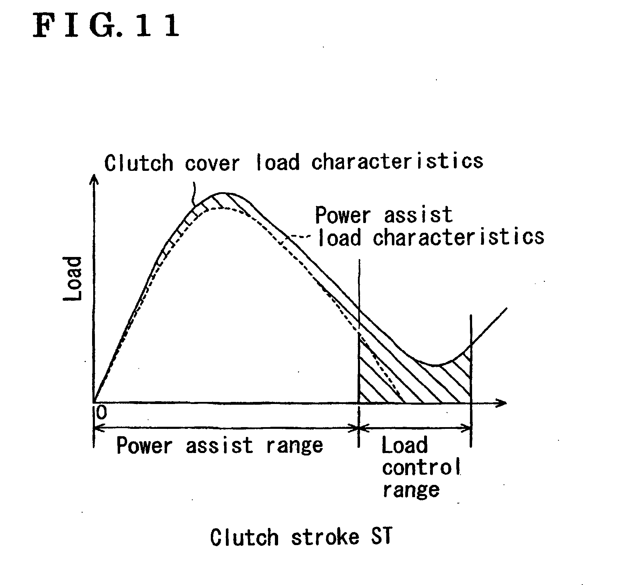

FIG. 11 is a diagram explaining characteristics of a load required for deforming the clutch cover 22 illustrated in FIG. 1 when a clutch stroke ST is increased from a clutch fully engaged condition, i.e. from a state in which the clutch stroke ST is set at zero value. The load required for deforming the diaphragm spring 25 is referred to as a clutch cover load. When the clutch 20 is in a fully engaged condition, the clutch disc 23 has been substantially fully engaged with the flywheel 21, and substantially no load has been applied to the clutch 20 from the rod 31 of the actuator 30 via the release fork 27. The clutch cover load is a predominant part of the load required for changing the posture of the diaphragm spring 25 such that the clutch cover load substantially corresponds to the load required for changing the posture of the diaphragm spring 25.

As explained in FIG. 11, the clutch cover load is proportionally increased depending on increase of the clutch stroke ST from the zero value and is then decreased passing through a maximum load value. The border between the power assist range and the load control range is predetermined around a bottom portion of the clutch cover load decrease. Needless to say, when the clutch 20 is brought into the frictionally disengaged condition during the normal clutch operation, the clutch stroke ST is positioned closer to a zero point relative to the border therebetween.

The biasing force of the assist spring 36 corresponds to the increase of the clutch stroke ST from the clutch fully engaged condition. Hereinafter, "a power assist load" is referred to as the biasing force of the assist spring 36 and is preset so as to vary at a slightly smaller load than the clutch cover load. Therefore, a difference between the clutch cover load and the power assist load illustrated with hatched lines in FIG. 11 represents the driving force to be outputted from the electric motor 32. In other words, the assist spring 36 acts to reduce the driving force to be outputted from the electric motor 32. Therefore the electric motor 32 or the actuator 30 can be downsized.

According to the above-described embodiment of the present invention, when the actual clutch stroke ST approximately reaches the border between the power assist range and the load control range, the movement of the assist spring 36 is restrained by the restraining wall 38e. In this case, as illustrated in FIG. 10 (b), the biasing force of the assist spring 36, i.e. the power assist load, is not generated while the clutch stroke ST has been within the load control range i.e. while the worm wheel 35 has been within the second rotational range. The clutch stroke ST does not reach the load control range during the normal clutch operation. Therefore, according to the embodiment of the present invention, the inconveniences of setting or adjusting the conditions of the assist spring 36 such as a spring constant and a spring length can be effectively prevented also in an area in which the abrasion of the clutch disc 23 is compensated.

As described above, according to the embodiment of the present invention, following effects can be achieved.
(1) When the worm wheel 35 is rotated within the load control range, the one end of the assist spring 36 is released from being supported by the supporting pin 35e of the worm wheel 35. At this point, the worm wheel 35 is not biased for its rotation by the assist spring 36 any more. Therefore, the inconveniences of setting the conditions of the assist spring 36 can be effectively prevented in the area in which the abrasion of the clutch disc 23 is compensated. The assist spring 36 can bias the worm wheel 35 for its rotation within the power assist area in which the clutch 20 is brought into the frictionally disengaged condition.
(2) The other end of the assist spring 36 (the fulcrum 42) is supported by the conventional housing 33, thereby avoiding increase of the number of components.
(3) The one end and the other end of the assist spring 36 are supported by the worm wheel 35 and by the housing 33 via the fulcrums 41 and 42, respectively. Therefore, the freedom of designing the assist spring 36 can be increased compared with an assist spring of both ends are directly worked supporting-structures.
(4) The fulcrums 41 and 42 are provided with the spring locating pins 41b and 42b for determining the position of the assist spring 36, respectively. Therefore, the assist spring 36 can be effectively prevented from dropping out of the worm wheel 35 or the housing 33 upon the pivotal rotation of the assist spring 36.
(5) The recessed portions of the fulcrums 41 and 42 are supported by the supporting pin 35e and the supporting wall 38d, respectively. Therefore, the fulcrums 41 and 42 can be effectively prevented from dropping out of the worm wheel 35 and the housing 33 upon the pivot rotation of the fulcrums 41 and 42.

The present invention is not limited only to the above-described preferred embodiment. Following modifications are applicable.

According to the illustrated embodiment of the present invention, the ends of the assist spring 36 are supported by the supporting pin 35e and the supporting wall 38d via the fulcrums 41 and 42, respectively. Alternatively, the one end of the assist spring 36 and the other end thereof can be worked to possess the structure corresponding to the fulcrums 41 and 42, respectively. In this case, the assist spring 36 could be directly supported by the supporting pin 35e and the supporting wall 38d.

According to the illustrated embodiment of the present invention, the worm wheel 35 is rotatably gear-meshed with the worm portion 34a of the rotary shaft 34. Alternatively, the rotary shaft 34 could possess a gear portion to be meshed with the worm wheel 35.

According to the illustrated embodiment of the present invention, the housing 33 (the supporting wall 38d and the restraining wall 38e) is used as the stationary portion. Alternatively, the stationary portion could be provided at the side of the housing cover 37. Still alternatively, the stationary portion could be an appropriate bracket for fixedly mounting the actuator 30 on the vehicle.

According to the illustrated embodiment of the present invention, the assist spring 36 is a coil spring. Alternatively, the assist spring 36 as the biasing means could be a leaf spring or the like.

## Claims

1. A clutch actuator (30) including a rotor (35) rotatably driven by a driving power source (32) for changing an engaged condition of a clutch (20) upon rotation of the rotor (35) within a first rotational range and for compensating for abrasion of the clutch (20) upon rotation of the rotor (35) within a second rotational range beyond the first rotational range, wherein the clutch actuator (30) further comprises
biasing means (36) for biasing the rotation of the rotor (35), one end of the biasing means (36) being supported by a supporting portion (35e) of the rotor (35), and the other end thereof being supported by a stationary portion (38d) of the clutch actuator (30) **characterized by**
stop means (38e, 38f) for disengaging the one end of the biasing means (36) from support by the rotor (35) when the rotor (35) rotates within the second rotational range.

2. A clutch actuator (30) according to claim 1, wherein the stop means (38e, 38f) comprises:
shoulder means (38e) for restraining continued movement of the one end of the biasing means (36) when the rotor (35) rotates within the second rotational range; and
means (38f) for allowing continued movement of the supporting portion (35e) of the rotor (35) when the rotor rotates within the second rotational range.

3. A clutch actuator (30) according to claim 1 or 2, in which the stationary portion (38d) is a portion of a housing (33) for housing the rotor (35) and the biasing means (36).

4. A clutch actuator (30) according to any one of claims 1, 2, and 3, wherein the one end and the other end of the biasing means (36) are supported by the rotor (35) and the stationary portion (38d) via fulcrums (41, 42), respectively.

5. A clutch actuator (30) according to claim 4, wherein each fulcrum possesses a means (41b, 42b) for locating the biasing means (36).

6. A clutch actuator (30) according to any preceding claim, wherein the biasing means (36) is a coil spring or a leaf spring.

7. A clutch actuator (30) according to any preceding claim, wherein the stationary portion(38e) is a raised and defined restraining wall portion of a housing (33), and the means (38f) is a guide groove recessed and defined at the restraining wall tracing a rotational locus of the supporting portion (35e).

8. A combination of a clutch actuator (30) according to any preceding claim and a clutch (20) wherein the cluth includes :
a flywheel (21) integrally rotated with an output shaft of an engine;
a clutch disc (23) disposed opposing the flywheel (21);
a pressure plate (24) pushing the clutch disc (23) towards the flywheel (21);
a diaphragm spring (25) of which posture changes in response to the rotation of the rotor (35);
a clutch cover (22) fixed to the flywheel (21); and
an adjusting mechanism (80) disposed between the pressure plate (24) and the diaphragm spring (25), defining a transmitting circuit of a force between the pressure plate (24) and the diaphragm spring (25), and changing a distance in an axial direction between the diaphragm spring (25) and the pressure plate (24),
wherein the adjusting mechanism (80) includes
a taper portion (81) provided on the pressure plate (24) and having a taper surface (81 a) in a direction from the pressure plate (24) to the diaphragm spring (25);
a cam means (85) fixed to the taper portion (81) and having cam teeth (85a) in a direction from the pressure plate (24) to the diaphragm (25);
an adjust wedge member (82) disposed between the taper portion (81) and the diaphragm spring (25) to be relatively rotatable and having an wedge-side taper surface (82a) being in contact with the taper surface (8 1 a);
a rack engagement member (83) provided at the adjust wedge member (82) and having rack engagement teeth (83a) in a direction from the diaphragm spring (25) to the pressure plate (24);
a rack (84) disposed between the rack engagement member (83) and the cam means (85) being rotatable relative to the rack engagement member (83) and the cam means (85) and having rack teeth (84a) being engagable with the rack engagement teeth (83a) and cam teeth (84b) being engagable with the cam teeth (85a);
a biasing member (87) for biasing the rack (84) in a direction for releasing an engagement between the rack (84) and the cam means (85) upon a slidable movement of the cam teeth (85a) and the cam teeth (84b);
a stopper (24a) for restraining an axial movement of the pressure plate (24) to become closer to the clutch cover (22); and
a holding member (86) for holding the adjust wedge member (82) at an end portion at an outer periphery of the diaphragm spring (25) for operating the adjust wedge member (82) in an axial direction following an operation of the edge portion at the outer periphery of the diaphragm spring (25) in an axial direction.

## Patentansprüche

1. Kupplungsbetätigungsvorrichtung (30), enthaltend einen Rotor (35), der drehbar durch eine Antriebsleistungsquelle (32) angetrieben wird zur Veränderung eines Eingriffszustands einer Kupplung (20) bei einer Rotation des Rotors (35) innerhalb eines ersten Rotationsbereichs und zum Kompensieren von Abnutzung der Kupplung (20) bei der Rotation des Rotors (35) innerhalb eines zweiten Rotationsbereichs über den ersten Rotationsbereich hinaus, wobei die Kupplungsbetätigungsvorrichtung (30) weiter enthält:
ein Vorbelastungsmittel (36) zum Vorbelasten der Rotation des Rotors (35), wobei ein Ende des Vorbelastungsmittels (36) durch einen Stützbereich (35e) des Rotors (35) gestützt wird, und das andere Ende davon durch einen stationären Bereich (38d) der Kupplungsbetätigungsvorrichtung (30) gestützt wird; **gekennzeichnet durch**
ein Anschlagmittel (38e, 38f) zum Trennen des einen Endes des Vorbelastungsmittels (36) von der Stütze **durch** den Rotor (35), wenn sich der Rotor (35) innerhalb des zweiten Rotationsbereichs dreht.

2. Kupplungsbetätigungsvorrichtung (30) nach Anspruch 1, wobei das Anschlagmittel (38e, 38f) enthält:
ein Schultermittel (38e) zum Begrenzen einer fortgesetzten Bewegung des einen Endes des Vorbelastungsmittels (36), wenn der Rotor (35) sich innerhalb des zweiten Rotationsbereichs dreht; und
ein Mittel (38f) zum Ermöglichen einer fortgesetzten Bewegung des Stützbereichs (35e) des Rotors (35), wenn sich der Rotor innerhalb des zweiten Rotationsbereichs dreht.

3. Kupplungsbetätigungsvorrichtung (30) nach Anspruch 1 oder 2, wobei der stationäre Bereich (38d) ein Bereich eines Gehäuses (33) zum Aufnehmen des Rotors (35) und des Vorbelastungsmittels (36) ist.

4. Kupplungsbetätigungsvorrichtung (30) nach einem der Ansprüche 1, 2 und 3, wobei das eine Ende bzw. das andere Ende des Vorbelastungsmittels (36) durch den Rotor (35) und den stationären Bereich (38d) über Drehachsen (41, 42) jeweils gestützt sind.

5. Kupplungsbetätigungsvorrichtung (30) nach Anspruch 4, wobei jede Drehachse ein Mittel (41b, 42b) zum Positionieren des Vorbelastungsmittels (36) enthält.

6. Kupplungsbetätigungsvorrichtung (30) nach einem der vorhergehenden Ansprüche, wobei das Vorbelastungsmittel (36) eine Schraubenfeder oder eine Blattfeder ist.

7. Kupplungsbetätigungsvorrichtung (30) nach einem der vorhergehenden Ansprüche, wobei der stationäre Bereich (38e) ein erhabener und definierter begrenzender Wandbereich eines Gehäuses (33) ist, und das Mittel (38f) eine Führungsnut ist, die vertieft ist und an der begrenzenden Wand definiert ist, welche einen Rotationsort des Stützbereiches (35e) nachzeichnet.

8. Kombination aus einer Kupplungsbetätigungsvorrichtung (30) nach einem der vorhergehenden Ansprüche und einer Kupplung (20), wobei die Kupplung enthält:
ein Schwungrad (21), das integral mit einer Ausgangswelle eines Motors gedreht wird;
eine Kupplungsscheibe (23), die gegenüberliegend zu dem Schwungrad (21) angebracht ist;
eine Druckplatte (24), die die Kupplungsscheibe (23) in Richtung auf das Schwungrad (21) drückt;
eine Membranfeder (25), deren Haltung sich als Antwort auf die Rotation des Rotors (35) verändert;
eine Kupplungsabdeckung (22), die an dem Schwungrad (21) befestigt ist; und
einen Justiermechanismus (80), der zwischen der Druckplatte (24) und der Membranfeder (25) angebracht ist, der einen Übertragungskreis für eine Kraft zwischen der Druckplatte (24) und der Membranfeder (25) definiert und einen Abstand in einer Axialrichtung zwischen der Membranfeder (25) und der Druckplatte (24) verändert,
wobei der Justiermechanismus (80) enthält:
einen konisch zulaufenden Bereich (81), der auf der Druckplatte (24) vorgesehen ist und eine konisch zulaufende Oberfläche (81a) in eine Richtung von der Druckplatte (24) zu der Membranfeder (25) aufweist;
ein Nockenmittel (85), das an dem konisch zulaufenden Bereich (81) befestigt ist und Nockenzähne (85a) in einer Richtung von der Druckplatte (24) zu der Membran (25) aufweist;
ein Justierkeilelement (82), das zwischen dem konisch zulaufenden Bereich (81) und der Membranfeder (25) angebracht ist, so dass es relativ drehbar ist und das eine konisch zulaufende Oberfläche der Kegelseite (82a) aufweist, die in Berührung mit der konisch zulaufenden Oberfläche (81a) ist;
ein Zahnstangeneingriffselement (83), das an dem Justierkeilelement (82) vorgesehen ist und Zahnstangeneingriffszähne (83a) in einer Richtung von der Membranfeder (25) zu der Druckplatte (24) aufweist;
eine Zahnstange (84), die zwischen dem Zahnstangeneingriffselement (83) und dem Nockenmittel (85) angebracht ist, wobei sie drehbar relativ zu dem Zahnstangeneingriffselement (83) und dem Nockenmittel (85) ist und Zahnstangenzähne (84a) aufweist, die in Eingriff mit den Zahnstangeneingriffszähnen (83a) zu bringen sind, und wobei die Nockenzähne (84b) mit den Nockenzähnen (85a) in Eingriff zu bringen sind;
ein Vorbelastungsmittel (87) zum Vorbelasten der Zahnstange (84) in einer Richtung zum Freigeben eines Eingriffs zwischen der Zahnstange (84) und dem Nockenmittel (85) bei einer Verschiebebewegung der Nockenzähne (85a) und der Nockenzähne (84b);
einen Anschlag (24a) zum Begrenzen einer Axialbewegung der Druckplatte (24), dass sie näher an die Kupplungsabdeckung (22) gelangt; und
ein Halteelement (86) zum Halten des Justierkeilelements (82) an einem Endbereich an einem äußeren Umfang der Membranfeder (25) zum Betätigen des Justierkeilelements (82) in einer Axialrichtung, einer Betätigung des Randbereichs am äußeren Umfang der Membranfeder (25) in einer Axialrichtung folgend.

## Revendications

1. Actionneur d'embrayage (30) incluant un rotor (35) entraîné en rotation par une source de puissance de propulsion (32) pour changer une condition embrayée d'un embrayage (20) sur rotation du rotor (35) à l'intérieur d'une première plage de rotation et pour compenser l'abrasion de l'embrayage (20) sur rotation du rotor (35) à l'intérieur d'une seconde plage de rotation au-delà de la première plage de rotation, dans lequel l'actionneur d'embrayage (30) comprend, en outre
un moyen de sollicitation (36) pour solliciter la rotation du rotor (35), une première extrémité du moyen de sollicitation (36) étant supportée par une partie de support (35e) du rotor (35), et son autre extrémité étant supportée par une partie fixe (38d) de l'actionneur d'embrayage (30),
**caractérisé par**
un moyen de butée (38e, 38f) pour libérer la première extrémité du moyen de sollicitation (36) du support par le rotor (35) lorsque le rotor (35) tourne à l'intérieur de la seconde plage de rotation.

2. Actionneur d'embrayage (30) selon la revendication 1, dans lequel le moyen de butée (38e, 38f) comprend :
un moyen d'épaulement (38e) pour limiter le déplacement continu de la première extrémité du moyen de sollicitation (36) lorsque le rotor (35) tourne à l'intérieur de la seconde plage de rotation ; et
un moyen (38f) pour permettre le déplacement continu de la partie de support (35e) du rotor (35) lorsque le rotor tourne à l'intérieur de la seconde plage de rotation.

3. Actionneur d'embrayage (30) selon la revendication 1 ou 2, dans lequel la partie fixe (38d) est une partie d'un logement (33) pour recevoir le rotor (35) et le moyen de sollicitation (36).

4. Actionneur d'embrayage (30) selon l'une quelconque des revendications 1, 2 et 3, dans lequel la première extrémité et l'autre extrémité du moyen de sollicitation (36) sont supportées par le rotor (35) et la partie fixe (38d) via des points d'appui (41, 42), respectivement.

5. Actionneur d'embrayage (30) selon la revendication 4, dans lequel chaque point d'appui possède un moyen (41b, 42b) pour positionner le moyen de sollicitation (36).

6. Actionneur d'embrayage (30) selon l'une quelconque des revendications précédentes, dans lequel le moyen de sollicitation (36) est un ressort hélicoïdal ou un ressort à lames.

7. Actionneur d'embrayage (30) selon l'une quelconque des revendications précédentes, dans lequel la partie fixe (38e) est une partie de paroi de limitation surélevée et définie d'un logement (33), et le moyen (38f) est une rainure de guidage évidée et définie au niveau de la paroi de limitation suivant un lieu de rotation de la partie de support (35e).

8. Combinaison d'un actionneur d'embrayage (30) selon l'une quelconque des revendications précédentes et d'un embrayage (20), dans laquelle l'embrayage inclut :
un volant (21) mis en rotation de manière solidaire avec un arbre de sortie d'un moteur ;
un disque d'embrayage (23) disposé opposé au volant (21) ;
une plaque de pression (24) poussant le disque d'embrayage (23) vers le volant (21) ;
un ressort de diaphragme (25) dont la posture change en réponse à la rotation du rotor (35) ;
un couvercle d'embrayage (22) fixé au volant (21) ; et
un mécanisme d'ajustement (80) disposé entre la plaque de pression (24) et le ressort de diaphragme (25), définissant un circuit de transmission d'une force entre la plaque de pression (24) et le ressort de diaphragme (25), et changeant une distance dans une direction axiale entre le ressort de diaphragme (25) et la plaque de pression (24), dans lequel le mécanisme d'ajustement (80) inclut
une partie conique (81) disposée sur la plaque de pression (24) et ayant une surface conique (81a) dans une direction de la plaque de pression (24) vers le ressort de diaphragme (25) ;
un moyen de came (85) fixé à la partie conique (81) et ayant des dents de came (85a) dans une direction de la plaque de pression (24) vers le diaphragme (25) ;
un élément de coin d'ajustement (82) disposé entre la partie conique (81) et le ressort de diaphragme (25) qui doit tourner relativement et ayant une surface conique côté coin (82a) qui est en contact avec la surface conique (81a) ;
un élément de mise en prise de crémaillère (83) disposé au niveau de l'élément de coin d'ajustement (82) et ayant des dents de mise en prise de crémaillère (83a) dans une direction du ressort de diaphragme (25) vers la plaque de pression (24) ;
une crémaillère (84) disposée entre l'élément de mise en prise de crémaillère (83) et le moyen de came (85) qui peut tourner relativement à l'élément de mise en prise de crémaillère (83) et le moyen de came (85) et ayant des dents de crémaillère (84a) qui peuvent s'engrener avec les dents de mise en prise de crémaillère (83a) et des dents de came (84b) qui peuvent s'engrener avec les dents de came (85a) ;
un élément de sollicitation (87) pour solliciter la crémaillère (84) dans une direction pour libérer une mise en prise entre la crémaillère (84) et le moyen de came (85) sur déplacement coulissant des dents de came (85a) et des dents de came (84b) ;
une butée (24a) pour limiter un déplacement axial de la plaque de pression (24) pour venir plus proche du couvercle d'embrayage (22) ; et
un élément de maintien (86) pour maintenir l'élément de coin d'ajustement (82) à une partie d'extrémité au niveau d'une périphérie externe du ressort de diaphragme (25) pour mettre en oeuvre l'élément de coin d'ajustement (82) dans une direction axiale suivant une opération de la partie de bord au niveau de la périphérie externe du ressort de diaphragme (25) dans une direction axiale.
